# EUROPEAN PATENT SPECIFICATION

(11) **EP 3 327 906 B1**
(45) Date of publication and mention of the grant of the patent: **22.07.2020**
(21) Application number: 17200524.1
(22) Date of filing: 08.11.2017
(51) Int. Cl.: H02K 11/215

(54) **A MAGNETIC SENSOR FOR ROTATING ELECTRIC MACHINES**
MAGNETISCHER SENSOR FÜR ROTIERENDE ELEKTRISCHE MASCHINEN.
CAPTEUR MAGNÉTIQUE DESTINÉ À DES MACHINES ÉLECTRIQUES TOURNANTES.

(30) Priority: 09.11.2016 IT 201600112719
(43) Date of publication of application: 30.05.2018
(73) Proprietor: Metalrota S.R.L., 41122 Modena (IT)
(72) Inventor: DAINESE, Paolo Luca, 41122 MODENA (IT)
(74) Representative: Gagliardelli, Fabrizio

(56) References cited:
- WO-A2-2013/057614
- DE-A1-102005 040 646
- DE-A1-102010 040 857
- DE-A1-102013 222 534
- US-A1- 2012 229 127

## Description

The present invention relates to a magnetic sensor for rotating electric machines such as, for example, electric motors.

Furthermore, the present invention relates to a rotating electric machine comprising the sensor itself.

It is known that in rotating electric machines, more in particular brushless synchronous motors, it is important to synchronise the motor by means of an electric controller.

This type of motor is used for example for the drive wheels mounted, for example, on AGVs.

In the case of an AGV, it is required to move at low speed with a high torque, due to the heavy load to transport. It is therefore important to maintain a high torque and, during baking through the use of an electric brake applied to the end of the motor shaft, the vehicle must brake in a short space.

Therefore, very precise control is necessary for rotating electric machines. Currently, for control, sensors are sometimes used that return digital signals that are problematic since the electronics return sinusoidal waves. Currently, in practice, power control manufacturers are increasingly offering controllers designed for two analog sinusoidal channels, which are certainly not compatible with digital sensors.

Currently, the use of magnetic sensors that solve this problem is known since the reading of the magnetic field detects the motor angle and other useful parameters for control purposes in the form of analog signals.

In particular, in the sector, magnetic sensors are known with magnets with double N and S polarity connected to the front end of the shaft and designed for an axial reading. Following the rotation in proximity to an electronic circuit, placed opposite the magnet, it is possible to obtain the two sinusoids at ends of electronic terminals.

Disadvantageously, the installation of these sensors creates two problems in the positioning of the electric brake that can no longer be inserted frontally at the end of the motor shaft. Therefore, the installation of the electric brake is problematic and requires the use of brackets and other means to solve the problem of the presence of the sensor at the front end. This solution implies high costs and technical complications.

Furthermore, it is difficult to detect the magnetic field because of the tolerance, connected with the distance of the magnet from the reader, which must also be respected due to the low magnetic force, resulting in an imprecise reading.

Also, due to the motor gears, the shaft undergoes axial displacements that lead to the instability of the output signal and therefore to imprecision in the reading.

Even more disadvantageously, when the brake is actuated it generates a lot of heat since the braking must be such that the motor shaft stops and does not slide.

This drawback leads to heat dilations of the shaft which are translated into further tolerance problems, resulting in an even more imprecise reading of the parameters by the sensor.

The problems mentioned above therefore lead to a synchronisation problem of the brushless motor.

The object of the present invention is to provide a rotating electric machine comprising a magnetic sensor that allows the problems that have emerged from the prior art to be overcome. In particular, the object of the present invention is to provide a rotating electric machine comprising a magnetic sensor that allows large dimensions to be prevented and that allows high precision also in the event of heat dilation and an electric machine comprising the motor itself that does not have any synchronisation problems, as defined in claim 1. Preferred embodiments are defined in dependent claims. The invention is set out in the appended set of claims.

The defined technical task and the specified aims are substantially achieved by a rotating electric machine comprising a magnetic sensor comprising the technical characteristics set out in one or more of the appended claims.

Additional features and advantages of the present invention will become more apparent from the approximate and thus non-limiting description of a preferred but not exclusive embodiment of a magnetic sensor for rotating electric machines and a rotating electric machine comprising the sensor.

DE 10 2010 040857 A1 (BOSCH GMBH ROBERT [DE]) 22 March 2012 (2012-03-22) describes a magnetic sensor where the Hall sensors are projecting into the rotor portion.

This description will be set out below with reference to the attached drawings, provided solely for indicative and therefore non-limiting purposes, in which:
- Figure 1 is a schematic representation according to a perspective view of a general rotating electric machine,
- Figure 2 is a schematic representation according to a perspective view of an embodiment of a first component of a magnetic sensor for rotating electric machines,
- Figure 3 is a schematic representation according to an exploded view of a component of a rotating electric machine to which the magnetic sensor according to this invention has been applied,
- Figure 4 is a schematic representation according to an exploded view of an embodiment of a first component of a magnetic sensor for rotating electric machines,
- Figure 5 is a schematic representation of an embodiment of a second component of a magnetic sensor for rotating electric machines,
- Figure 6 is a schematic representation of a feedback control system, and
- Figure 7 is a graph that shows the signals produced by analog Hall sensors envisaged by the invention.

With reference to the appended figures, 1 indicates overall a magnetic sensor for rotating electric machines 2.

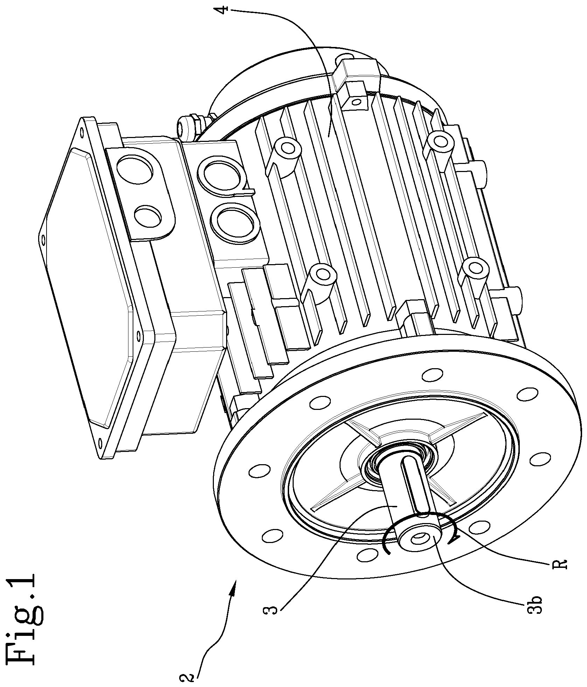

The rotating electric machine 2 has been illustrated in figure 1.

For the purpose of illustrating the present invention a motor shaft 3 of the machine 2 and a frame 4 thereof have been represented.

The shaft 3 is configured to rotate with a rotational movement "R" and the frame 4 as represented is configured to contain all the components of the machine 2 which as previously mentioned are not of interest for describing the elements of this invention.

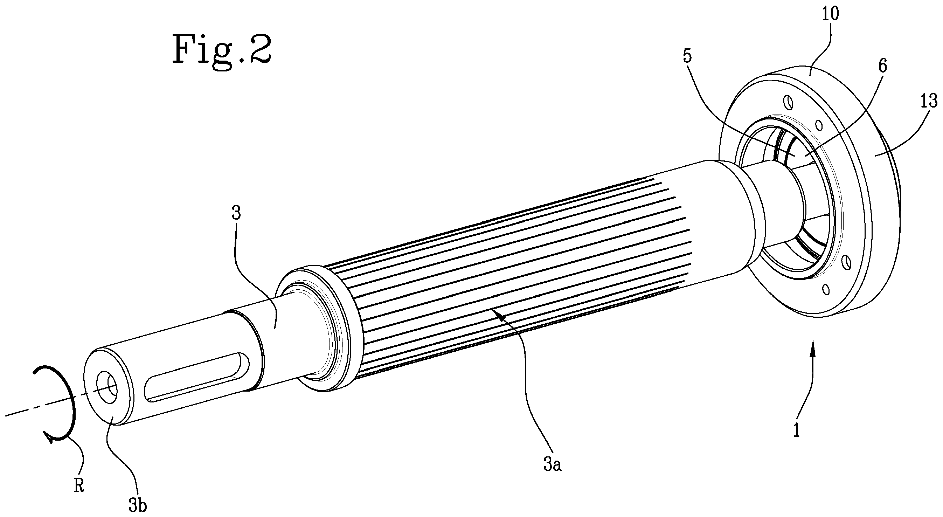

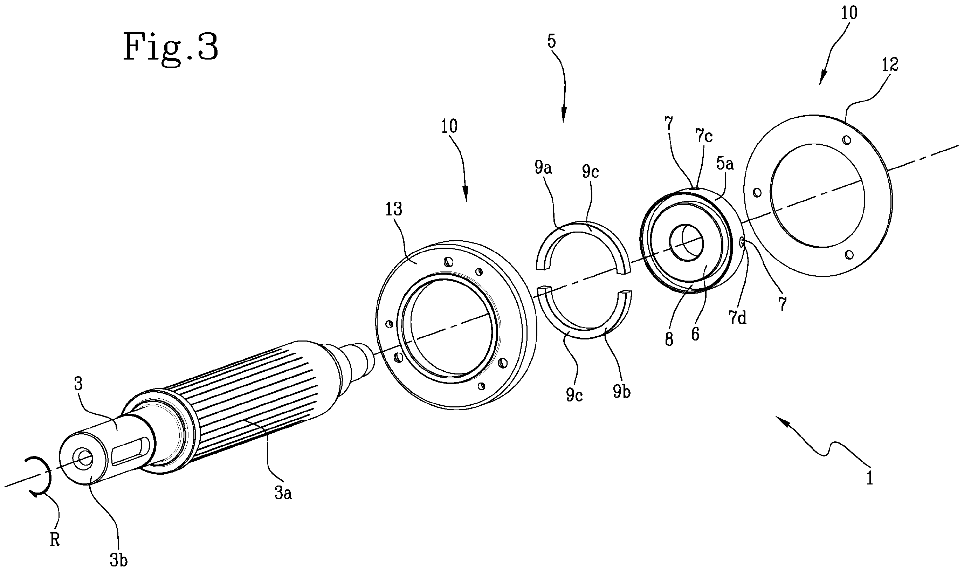

As represented in figure 2 and in figure 3, the sensor 1 according to this invention is mounted solidly on the shaft 3.

In particular, the sensor 1 comprises a rotary portion 5 which, in use, is fixed to a lateral surface 3a of the shaft 3. Preferably the rotary portion 5 of the sensor is fixed onto the lateral surface 3a in an intermediate point along the shaft 3. Intermediate point means any point inside or outside the frame 4, preferably a point that excludes the front surface of the end 3b of the shaft 3 itself, this surface not being part of the lateral surface 3a. Therefore, the rotary portion 5 is solidly constrained to the shaft 3 in a determined axial position and is adapted to produce a magnetic flux radially from an external lateral surface 5a. In particular, the rotary portion 5 produces a magnetic flux from its external lateral surface 5a in a radial direction with respect to the shaft 3.

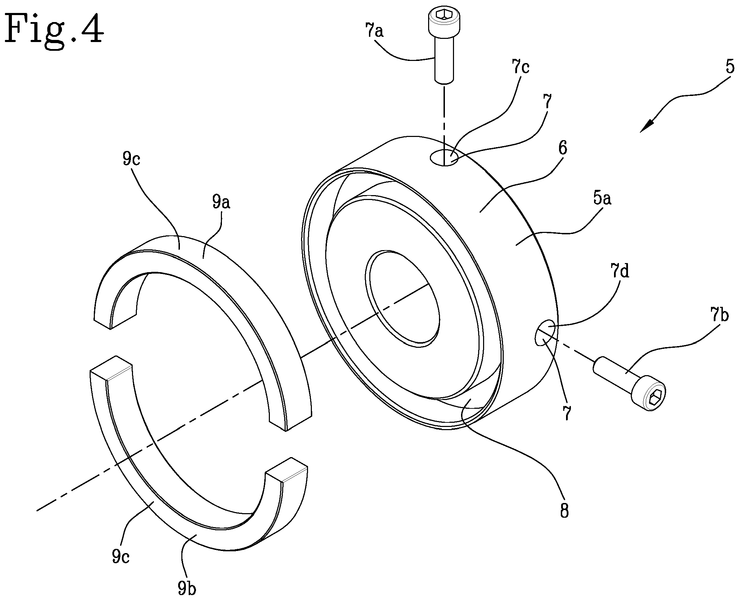

The rotary portion 5 comprises a bushing 6, represented in more detail in figure 4, adapted to be fitted in a radially external position on the shaft 3 previously described. The bushing 6 comprises fastening means 7 configured to make it solidly constrained to the shaft 3 in the intermediate position previously described. The fastening means 7 may comprise at least two threaded elements 7a, 7b (not shown) arranged radially with respect to the bushing 6 and housed in respective radial seats 7c, 7d of the bushing 6 itself.

Preferably, the threaded elements 7a and 7b are made in the form of screws configured to fix the bushing 6 and to make it solidly constrained to the shaft 3.

The bushing 6 further comprises a ring-shaped seat 8 preferably open towards a front portion of the bushing itself.

The bushing 6 thus described can be made of non-magnetic material and, preferably, of aluminium or plastic material.

The rotary portion 5 comprises at least two magnets 9a, 9b, preferably housed in the ring-shaped seat 8 of the bushing 6, if provided. The magnets 9a and 9b are arranged so as to create a magnetic field having discontinuities that, during the rotation of the shaft 3, lead to variations of the magnetic flux itself.

In detail, the magnets 9a and 9b are appropriately oriented to allow the desired reading. For example, one of the magnets may have north facing outwards and south facing inwards and vice versa for the other magnet; other configurations are possible in which north is arranged at a longitudinal end and south at the opposite end, etc.

Preferably, to obtain this result, each magnet 9a and 9b is made in the form of a circular half-crown 9c or half-torus.

More precisely, the magnets 9a, 9b are inserted to measure in the ring-shaped seat 8 of the bushing 6 which is therefore substantially counter-shaped to the magnets themselves.

Each longitudinal end of each magnet 9a, 9b may be facing, and preferably in contact (direct or through a means of conjunction) with a respective end of the other magnet.

Alternatively, to increase the points of discontinuity, a higher number of magnets may be used, for example four, which will be realised in the form of a quarter of a circular crown (this embodiment of the magnets is not represented).

The sensor 1 further comprises a stator portion 10 which, in use, is fixed to the frame 4 of the machine 2.

The stator portion 10 comprises a means for radially detecting the magnetic flux variations during the rotation "R" of the shaft 3. In particular, the stator portion 10 comprises at least two devices 11a, 11b arranged angularly with respect to the shaft 3.

Even more in particular, the two devices 11a and 11b are two analog Hall sensors 11c and 11d and arranged at 90° with respect to each other. The Hall sensors 11c and 11d are arranged in this way to continuously detect the magnets 9a and 9b so as to constantly detect the magnetic flux variation on the external lateral surface 5a of the rotor portion 5 during the rotation of the shaft.

To be precise, the two analog Hall sensors generate two sinusoidal waveforms always with positive polarity staggered by 90° with one sinusoid/turn of the rotary axis.

Such sinusoidal waves are preferably always positive, with an intermediate value, offset, half the power supply voltage.

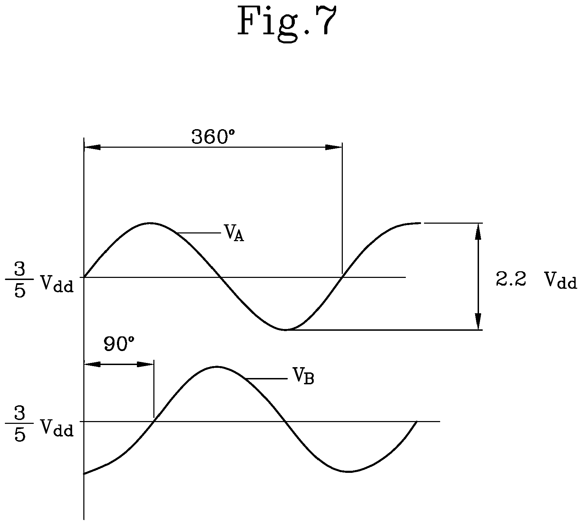

Figure 7 shows the two sinusoidal waves Va, Vb obtained with the two analog Hall cells, represented with the mentioned electric staggering of 90°. Another advantageous characteristic is that of having a complete sinuosoid with the rotation of the axis through 360°, i.e. one sinusoid/turn.

This precision is obtained thanks to the mechanical precision of the sensors and of the magnetic segments, fastened in coupling to create a single magnetic ring with two polarities. The perfect mechanical alignment implies resulting electrics with a perfect sinusoidal value, without ripples or signal vacuums. The high inductive value of the magnets makes the invention immune to the magnetic influences of other contiguous components such as, for example, the electric brake.

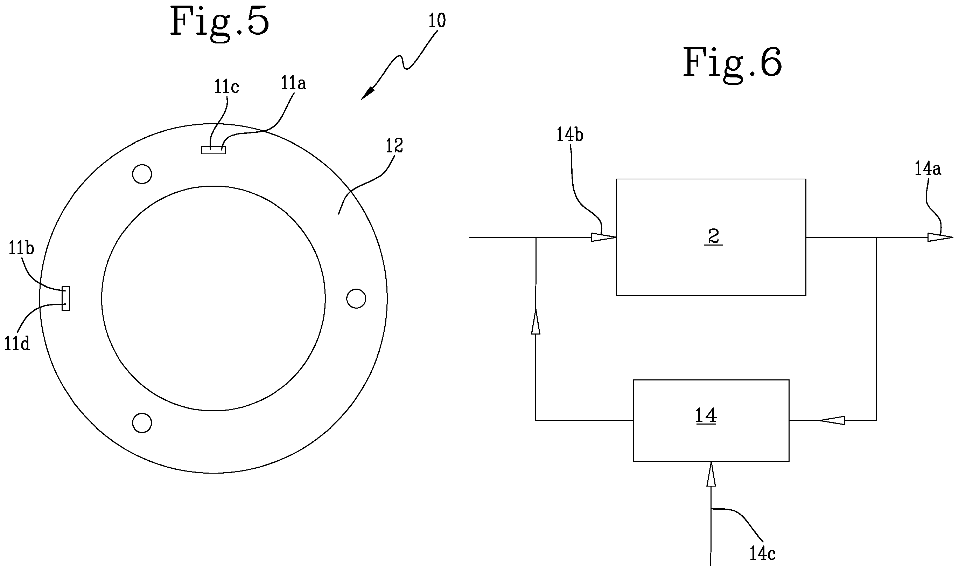

The stator portion 10 comprises a circuit board 12, represented in detail in figure 5, configured to be electrically connected to the Hall sensors 11c and 11d. The circuit board 12 has an annular conformation adapted to be arranged coaxially with respect to the shaft 3. In particular, the circuit board 12 is arranged so as to allow the Hall sensors 11c and 11d to measure identification parameters of the machine 2. Identification parameters means all the parameters, such as angular speed or angular position of the magnets 9a and 9b, which can be identified from the measurement of the magnetic field flux variation.

Preferably, as represented in figure 2 and in figure 3, the stator portion 10 may comprise a protective shell 13 to protect the circuit board 12. The protective shell 13 is configured so as to allow the Hall sensors 11c and 11d to measure the identification parameters of the machine 2. Preferably, the Hall sensors 11c and 11d are arranged on the stator portion 10 so as to be positioned in a radially external position with respect to the rotor portion 5 in an assembled configuration of the sensor 1 on the shaft 3.

As depicted in figure 6, the machine 2 further comprises a controller 14. The sensor 1 is configured to send an output signal 14a, relative to the identification parameters of the machine 2, to the controller 14.

In particular, the controller 14 is for feedback synchronisation of the machine 2.

The controller 14 according to the invention is of the type adapted to control two analog sinusoidal channels, such as those produced by the analog Hall sensors according to the invention.

Thanks to the combination of the analog sensors and the controller 14 designed to receive analog sinusoidal signals, it is possible to obtain an analog brushless synchronous motor.

More in particular, the sensor 1 measures the output signal 14a, relative to the identification parameters of the machine 2, by sending it to the controller 14. The controller 14 compares this output signal 14a of the machine 2 with an identification parameter 14c. The identification parameter 14c is relative to a nominal value of one or more of the identification parameters of the machine 2 that is to be obtained for the correct synchronisation thereof. From the comparison of the two parameters 14a and 14c, the controller 14 sends an input signal 14b to the machine 2 especially modified to obtain an output signal 14a equal to the identification parameter 14c.

Even more in particular, the stator portion 10 of the sensor 1 measures the magnetic flux variations of the rotor portion 5 deriving from the rotation of the shaft 3. From this magnetic flux variation the sensor 1 identifies the output signal 14a relative to the identification parameters of the machine 2. The magnetic sensor 1 for rotating electric machines 2 as previously described is able to overcome the drawbacks that have emerged from the prior art. In particular, the sensor 1 is configured to be fitted in a radially external position onto the shaft 3 in any intermediate portion thereof. This arrangement of the magnets 9a and 9c allows greater precision of the sensor 1, as well as defining a configuration with small dimensions.

In even more detail, the invention produces a stable signal regardless of the axial clearances, since the measurement is radial. In the pilot circuit there may be added two calibration and adjustment trimmers of the two aforementioned sinusoidal signals. This allows the compatibility to be extended to the most important motor power electronic control and command manufacturers.

The Applicant has tested the proposed sensor in various conditions of use, at different synchronisation speeds, different installations on motors with different powers and at thermal conditions at the limit of the thermal threshold, up to 150°C.

## Claims

1. A rotating electric machine (2) comprising:
a motor shaft (3) configured to rotate with rotational movement (R);
a controller (14); and
a magnetic sensor (1) that is solidly mounted on said rotating shaft (3);
wherein said magnetic sensor (1) is configured to send an output signal (14a) relating to identification parameters identifying the rotating electric machine (2) to said controller (14) for feedback synchronization of the rotating electric machine (2); the magnetic sensor (1) comprising:
- a rotary portion (5), fixed to a lateral surface (3a) of an intermediate point of the shaft (3) in a given axial position of the shaft (3) and suitable for producing a magnetic flux radially from an external lateral surface (5a) of the rotary portion (5); and
- a stator portion (10), fixed to a frame (4) of the electric machine (2), and comprising means for radially detecting variations in the magnetic flux during rotation (R) of the shaft (3),
said rotary portion (5) comprises:
-- a bushing (6) suitable for being fitted in a radially external position on the shaft (3) and comprising fastening means (7);
-- at least two magnets (9a, 9b) inserted in said bushing (6) and arranged so as to create a magnetic field having discontinuities of the field itself resulting in a variation of the magnetic flux during rotation (R) of the shaft (3);
wherein said means for detecting variations in the magnetic flux comprises at least two devices (11a, 11b);
**characterized in that** said two devices are analog Hall sensors (11c, 11d), arranged angularly, at 90° with respect to each other, with respect to the shaft (3), in order to continuously detect the magnets (9a, 9b) so as to constantly detect a magnetic flux variation on said external lateral surface (5a) of the rotary portion (5) during the rotation of the shaft, thereby generating two sinusoidal waveforms always with positive polarity staggered by 90° with one turn of the rotary axis;
wherein said Hall sensors (11c, 11d) are arranged on the stator portion (10) so as to be positioned in a radially external position with respect to the rotor portion (5); and
wherein said controller (14) is designed to receive analog sinusoidal signals.

2. The rotating electric machine (2) according to claim 1, wherein the magnets (9a, 9b) are housed in a ring-shaped seat (8) of the bushing (6).

3. The rotating electric machine (2) according to claim 1 or 2, wherein said bushing (6) is made of aluminium or a plastic material.

4. The rotating electric machine (2) according to one or more of the preceding claims, wherein the said rotary portion (5) comprises exactly two magnets (9a, 9b), wherein each magnet (9a, 9b) is realized in the shape of a semicircle (9c, 9d).

5. The rotating electric machine (2) according to one or more of the preceding claims, wherein said stator portion (10) comprises a printed circuit board (12) that is electrically connected to the devices (11a, 11b) and having a ring shape suitable for being arranged coaxially with respect to said shaft (3).

6. The rotating electric machine (2) according to the preceding claim, wherein said printed circuit board (12) is covered with a protective shell (13) configured so as to enable the devices (11a, 11b) to measure the identification parameters identifying the rotating electric machine (2).

## Patentansprüche

1. Rotierende elektrische Maschine (2), umfassend:
eine Motorwelle (3), die konfiguriert ist, um sich mit einer Drehbewegung (R) zu drehen; eine Steuerung (14); und
einen magnetischen Sensor (1), der fest auf der rotierenden Welle (3) montiert ist; wobei der magnetische Sensor (1) konfiguriert ist, um ein Ausgangssignal (14a) bezüglich Identifikationsparameter, die die rotierende elektrische Maschine (2) identifizieren, an die Steuerung (14) zur Rückkopplungssynchronisation der rotierenden elektrischen Maschine (2) zu senden; wobei der magnetische
Sensor (1) umfasst:
- einen Drehabschnitt (5), der an einer Seitenfläche (3a) eines Zwischenpunkts der Welle (3) in einer gegebenen axialen Position der Welle (3) befestigt ist und zur Erzeugung eines Magnetflusses radial von einer äußeren Seitenfläche (5a) des Drehabschnitts (5) geeignet ist; und
- einen Statorabschnitt (10), der an einem Rahmen (4) der elektrischen Maschine (2) befestigt ist, und
umfassend Mittel zum radialen Erfassen von Änderungen im Magnetflusse während der Drehung (R) der Welle (3),
der Drehabschnitt (5) umfasst:
-- eine Buchse (6), die zum Anbringen in einer radial äußeren Position auf der Welle (3) geeignet ist und Befestigungsmittel (7) umfasst;
-- mindestens zwei Magnete (9a, 9b), die in die Buchse (6) eingesetzt und so angeordnet sind, dass ein Magnetfeld mit Diskontinuitäten des Feldes selbst erzeugt wird, was zu einer Änderung des Magnetflusses während der Drehung (R) der Welle (3) führt;
wobei das Mittel zum Erfassen von Änderungen des Magnetflusses mindestens zwei Vorrichtungen (11a, 11b) umfasst;
**dadurch gekennzeichnet, dass** die beiden Vorrichtungen analoge Hallsensoren (11c, 11d) sind, die bei 90° zueinander in Bezug auf die Welle (3) winkelig angeordnet sind, um die Magnete (9a, 9b) so kontinuierlich zu erfassen, um während der Drehung der Welle ständig eine Änderung des Magnetflusses an der äußeren Seitenfläche (5a) des Drehabschnitts (5) zu erfassen, wodurch zwei sinusförmige Wellenformen immer mit positiver Polarität erzeugt werden, die um 90° mit einer Umdrehung der Drehachse versetzt sind;
wobei die Hallsensoren (11c, 11d) auf dem Statorabschnitt (10) so angeordnet sind, dass sie in einer radial äußeren Position in Bezug auf den Rotorabschnitt (5) positioniert sind; und
wobei die Steuerung (14) so ausgelegt ist, dass sie analoge sinusförmige Signale empfängt.

2. Rotierende elektrische Maschine (2) nach Anspruch 1, wobei die Magnete (9a, 9b) in einem ringförmigen Sitz (8) der Buchse (6) untergebracht sind.

3. Rotierende elektrische Maschine (2) nach Anspruch 1 oder 2, wobei die Buchse (6) aus Aluminium oder einem Kunststoffmaterial besteht.

4. Rotierende elektrische Maschine (2) nach einem oder mehreren der vorhergehenden Ansprüche, wobei der Drehabschnitt (5) genau zwei Magnete (9a, 9b) umfasst, wobei ein jeder Magnet (9a, 9b) in der Form eines Halbkreises (9c, 9d) realisiert ist.

5. Rotierende elektrische Maschine (2) nach einem oder mehreren der vorhergehenden Ansprüche, wobei der Statorabschnitt (10) eine Leiterplatte (12) umfasst, die elektrisch mit den Vorrichtungen (11a, 11b) verbunden ist und eine geeignete Ringform aufweist, um in Bezug auf die Welle (3) axial angeordnet zu werden.

6. Rotierende elektrische Maschine (2) nach dem vorhergehenden Anspruch, wobei die Leiterplatte (12) mit einer Schutzhülle (13) bedeckt ist, die konfiguriert ist, um zu ermöglichen, dass die Vorrichtungen (11a, 11b) die Identifikationsparameter, die die rotierende elektrische Maschine (2) identifizieren, messen.

## Revendications

1. Machine électrique tournante (2) comprenant:
un arbre de moteur (3) configuré pour tourner avec un mouvement de rotation (R); un contrôleur (14); et
un capteur magnétique (1) étant solidement monté sur ledit arbre rotatif (3); dans laquelle ledit capteur magnétique (1) est configuré pour envoyer un signal de sortie (14a) relatif à des paramètres d'identification identifiant la machine électrique tournante (2) au dit contrôleur (14) pour une synchronisation de rétroaction de la machine électrique tournante (2); le capteur magnétique (1), comprenant:
- une partie rotative (5), fixée à une surface latérale (3a) d'un point intermédiaire de l'arbre (3) dans une position axiale donnée de l'arbre (3) et adaptée pour produire un flux magnétique radialement à partir d'une surface latérale (5a) externe de la partie rotative (5); et
- une partie statorique (10) fixée à un châssis (4) de la machine électrique (2), et
comprenant des moyens pour détecter radialement des variations du flux magnétique pendant la rotation (R) de l'arbre (3),
ladite partie rotative (5) comprend:
-- une bague (6) adaptée pour être montée en position radialement extérieure sur l'arbre (3) et comprenant des moyens de fixation (7);
-- au moins deux aimants (9a, 9b) introduits dans ladite bague (6) et disposés de sorte à créer un champ magnétique présentant des discontinuités du champ lui-même résultant en une variation du flux magnétique pendant la rotation (R) de l'arbre (3);
dans lequel ledit moyen de détection des variations du flux magnétique comprend au moins deux dispositifs (11a, 11b);
**caractérisée en ce que** lesdits deux dispositifs sont des capteurs à effet Hall (11c, 11d) analogiques, disposés angulairement, à 90° l'un par rapport à l'autre par rapport à l'arbre (3), afin de détecter en continu les aimants (9a, 9b) de sorte à détecter en permanence une variation du flux magnétique sur ladite surface latérale (5a) externe de la partie rotative (5) pendant la rotation de l'arbre, générant ainsi deux formes d'onde sinusoïdales toujours de polarité positive décalées de 90° avec un tour de l'axe de rotation;
dans laquelle lesdits capteurs à effet Hall (11c, 11d) sont disposés sur la partie statorique (10) de manière à être positionnés dans une position radialement extérieure par rapport à la partie rotorique (5); et
dans laquelle ledit contrôleur (14) est conçu pour recevoir des signaux sinusoïdaux analogiques.

2. Machine électrique tournante (2) selon la revendication 1, dans laquelle les aimants (9a, 9b) sont logés dans un siège annulaire (8) de la bague (6).

3. Machine électrique tournante (2) selon la revendication 1 ou 2, dans laquelle ladite bague (6) est en aluminium ou en matière plastique.

4. Machine électrique tournante (2) selon une ou plusieurs des revendications précédentes, dans laquelle ladite partie tournante (5) comprend exactement deux aimants (9a, 9b), dans laquelle chaque aimant (9a, 9b) est réalisé sous la forme d'un demi-cercle (9c, 9d).

5. Machine électrique tournante (2) selon une ou plusieurs des revendications précédentes, dans laquelle ladite partie statorique (10) comprend une carte de circuit imprimé (12) étant électriquement connectée aux dispositifs (11a, 11b) et ayant une forme annulaire adaptée pour être disposée coaxialement par rapport au dit arbre (3).

6. Machine électrique tournante (2) selon la revendication précédente, dans laquelle ladite carte de circuit imprimé (12) est recouverte d'une coque de protection (13) configurée de manière à permettre aux dispositifs (11a, 11b) de mesurer les paramètres d'identification identifiant la machine électrique tournante (2).
